Europäisches Patentamt

European Patent Office

Office européen des brevets

(11) Numéro de publication: **0 252 565 B1**

(12) **FASCICULE DE BREVET EUROPEEN**

(45) Date de publication de fascicule du brevet: **27.04.94** (51) Int. Cl.⁵: **G02B 6/12**

(21) Numéro de dépôt: **87201284.4**

(22) Date de dépôt: **07.07.87**

(54) **Dispositif semiconducteur intégré du type dispositif de couplage entre un photodéecteur et un guide d'ond lumineuse.**

(30) Priorité: **09.07.86 FR 8609984**

(43) Date de publication de la demande:
**13.01.88 Bulletin 88/02**

(45) Mention de la délivrance du brevet:
**27.04.94 Bulletin 94/17**

(84) Etats contractants désignés:
**DE FR GB IT SE**

(56) Documents cités:
**EP-A- 0 179 507**
**FR-A- 2 337 449**
**GB-A- 2 105 863**
**US-A- 4 360 246**

**FREOUENZ, vol. 35, no. 9, septembre 1981, pages 247-252, Berlin, DE; K.-H. TIETGEN: "Probleme der Topographie integriert optis- cher Schaltungen"**

**IBM TECHNICAL DISCLOSURE BULLETIN, vol. 20, no. 11B, avril 1978, pages 4714-4715, New York, US; J.D. TOMPKINS: "Integrated optics waveguide"**

(73) Titulaire: **LABORATOIRES D'ELECTRONIOUE PHILIPS**
**3, Avenue Descartes**
**F-94450 Limeil-Brévannes(FR)**

(84) Etats contractants désignés:
**FR**

(73) Titulaire: **N.V. Philips' Gloeilampenfabrieken**
**Groenewoudseweg 1**
**NL-5621 BA Eindhoven(NL)**

(84) Etats contractants désignés:
**DE GB IT SE**

(72) Inventeur: **Gentner, Jean-Louis Société Civile S.P.I.D.**
**209, rue de l'Université**
**F-75007 Paris(FR)**
Inventeur: **Erman, Marko Société Civile S.P.I.D.**
**209, rue de l'Université**
**F-75007 Paris(FR)**

(74) Mandataire: **Landousy, Christian et al**
**Société Civile S.P.I.D.**
**156, Boulevard Haussmann**
**F-75008 Paris (FR)**

Rank Xerox (UK) Business Services
(3.10/3.09/3.3.3)

APPLIED PHYSICS LETTERS, vol. 46, no. 5, mars 1985, pages 498-500, American Institute of Physics, Woodbury, New York, US; R.W. WU et al.: "Optical waveguide detection: photodetector array formed on the waveguide utilizing laser recrystallized silicon"

## Description

L'invention concerne un dispositif semiconducteur intégré, du type dispositif de couplage entre un photodétecteur D et un guide d'onde lumineuse, ce photodétecteur fonctionnant dans une bande de longueurs d'ondes donnée et ce dispositif comportant, en surface d'un substrat semiconducteur en un composé III-V, des couches de composés III-V parmi lesquelles :

- une couche $C_0$ de confinement d'indice de réfraction $n_0$,
- une couche $C_1$ transparente pour ladite bande de longueurs d'onde, dite première couche transparente, qui est réalisée en surface de la couche de confinement $C_0$, et qui présente un indice de réfraction $n_1$ supérieur à l'indice $n_0$ de la couche de confinement ($n_1 > n_0$), couche $C_1$ dans laquelle est formé un guide $G_1$ dit guide principal,
- une couche $C_2$ transparente pour ladite bande de longueurs d'onde, dite seconde couche transparente, qui présente un indice de réfraction $n_2$ supérieur à l'indice $n_1$ de la première couche transparente ($n_2 > n_1$), couche $C_2$ dans laquelle est formé un guide $G_2$ dit guide intermédiaire, couplé avec le guide principal sur une longueur $L_1$ dite de couplage,
- une couche $C_3$, dite couche absorbante pour ladite bande de longueurs d'onde, disposée directement sur la seconde couche transparente, qui présente un indice de réfraction $n_3$ supérieur à l'indice $n_2$ de la seconde couche transparente ($n_3 > n_2 > n_1 > n_0$), et qui est surmontée d'une couche $C_4$, les couches $C_3$ et $C_4$ ayant des types de conductivité opposés et formant une jonction p-n qui constitue un l'élément photodétecteur D couplé avec le guide intermédiaire G2 par couplage vertical direct sur une longueur $L_2$ dite de couplage.

Le dispositif selon l'invention trouve son application dans la détection du signal de sortie sur l'une des voies d'un interféromètre de type Mach-Zender par exemple, ou sur les voies de sortie d'une matrice de commutation optique, pour commander une contre-réaction d'ajustage de la tension des électrodes dans le but de compenser les dérives indésirables par exemple. Ce dispositif trouve aussi son application dans la réalisation de bistables optiques par exemple.

Un dispositif avec un photodétecteur est déjà connu de l'état de la technique par le brevet US 4 360 246 qui décrit un dispositif semiconducteur en GaAs, incluant un guide de lumière avec des moyens de confinement de la lumière, et un détecteur disposé en surface du guide.

La formation du guide de lumière comprend une couche guidante, transparente aux radiations dans le domaine de longueurs d'onde 0,6 - 0,9 $\mu$m, constituée à cet effet du matériau semiconducteur ternaire GaAlAs non dopé.

Les moyens de confinement comprennent d'une part une couche sous-jacente d'indice plus faible que la couche guidante, en matériau semiconducteur ternaire GaAlAs, où Ga et Al sont en concentration différente, et qui est non dopée. Les moyens de confinement comprennent d'autre part un ruban de guidage en oxyde, en diélectrique ou en matériau semiconducteur.

Selon le brevet US cité, le détecteur est un phototransistor de type FET. Il est formé d'une couche de matériau semiconducteur GaAs, absorbante aux longueurs d'onde 0,6 - 0,9 $\mu$m, réalisée en surface du guide. Ce matériau GaAs est fortement dopé $n^+$ pour constituer la région active du transistor. Des contacts ohmiques de source et drain sont en outre réalisés, ainsi que, éventuellement, un contact de grille qui est disposé dans l'alignement du guide de lumière. Lorsque le phototransistor est muni d'une grille, il présente un gain.

Du fait des indices de réfraction relatifs de la couche guidante et de la couche active, et du fait du coefficient d'absorption de cette dernière, la lumière se propageant dans la couche guidante va passer dans la couche active du phototransistor FET dont elle va influencer le fonctionnement.

Un autre dispositif est encore connu par le brevet GB 2 105 868. Ce document décrit un dispositif à 7 couches pour démultiplexer une onde se propageant dans un guide principal réalisé en un matériau semiconducteur, de type n.

Le dispositif décrit dans le brevet GB comprend en particulier une partie intermédiaire réalisée au-dessus du guide principal, en forme de languette, constituée d'un matériau semiconducteur de type n, d'indice de réfraction plus élevé que celui du guide principal et comprend ensuite, réalisée à l'extrémité de ladite languette par rapport au sens de propagation, une photodiode, constituée d'une couche de matériau semiconducteur de type p d'indice plus faible que celui de la languette et absorbant pour certaines longueurs d'onde.

L'effet du démultiplexage voulu est obtenu en utilisant, pour réaliser les différentes couches de la structure, des matériaux ayant des indices de réfraction de plus en plus élevés, et des largeurs de bande interdite de plus en plus faibles au fur et à mesure que l'on s'élève dans la structure empilée, de manière à sélectionner des ondes en fonction de leur fréquence parmi celles du domaine large du guide principal, et à les amener à se propager dans des couches séparées empilées verticalement.

Ainsi la photodiode ne détecte pas une quantité de lumière déterminée par rapport à l'énergie de l'onde propagée par le guide principal, mais une partie de cette onde qui est en deçà d'une fréquence déterminée par les largeurs de bande interdite des différentes couches sous-jacentes et celle de la couche p de diode.

Le dispositif connu du brevet GB comprend aussi notamment, entre les couches inférieures formant le guide principal et la languette formant le guide intermédiaire, une couche absorbante dopée p. Cette couche fait en sorte que les ondes de fréquences différentes sont mieux séparées, car elle est absorbante pour certaines fréquences des ondes du guide principal. Comme le couplage entre la languette et le guide principal n'est pas direct, mais fonction de l'épaisseur de la largeur de bande interdite et de l'indice du matériau de ladite couche p, ces paramètres influent sur la longueur de couplage de celles des ondes qui passent par evanescence du guide principal vers la languette.

La photodiode du dispositif connu est seulement appropriée à détecter l'existence d'ondes dans certains domaines de longueurs d'onde.

D'autre part, le dispositif connu n'est pas approprié à effectuer une détection dans une région du substrat topologiquement éloignée du guide principal.

Un autre dispositif de couplage est encore connu de l'état de la technique par la publication de R. TROMER dans "Electronics Letters 25th, April 1985, Vol.21, N°.9" intitulée "Monolithic In-GaAs Photodiode Array illuminated through an integrated waveguide". Ce document décrit un dispositif réalisé à partir d'un substrat en phosphure d'indium (InP), orienté (100) et dopé au soufre d'épaisseur 220$\mu$m et de type n$^+$, sur une face duquel est réalisé un guide d'onde intégré, et sur l'autre face duquel est réalisée une photodiode PIN en arséniure de gallium et d'indium (InGaAs). Le dispositif est réalisé en deux étapes. La première étape comprend la réalisation de la photodiode par croissance épitaxiale en phase liquide d'une couche d'arséniure de gallium et d'indium (InGaAs) non dopée, de type n d'épaisseur 3$\mu$m, servant de couche active, puis de deux fines couches tampons de composition quaternaire en InGaAsP, suivies d'une couche supérieure en phosphure d'indium (InP). La couche supérieure de phosphure d'indium est destinée à protéger le dispositif en cours d'élaboration pendant la seconde étape de croissance épitaxiale. Cette seconde étape de croissance épitaxiale comprend la réalisation du guide d'onde sur la face opposée du substrat par le dépôt d'une succession de trois couches, la première de phosphure d'indium (InP), la seconde d'InGaAsP ($\lambda_g$ = 1,036$\mu$m) et la troisième de phosphure d'indium (InP). La lumière est introduite dans la photodiode en traversant la totalité du substrat. A cet effet une facette est créée en travers des couches formant le guide, sous la photodiode, au moyen d'une gravure anisotrope de ces couches. L'élaboration de la photodiode, qui est du type PLANAR, comprend encore la diffusion sur un diamètre de 100$\mu$m d'atomes de zinc (Zn) dans la couche d'arséniure de gallium et d'indium (InGaAs), la passivation des surfaces externes par une couche de Si$_3$N$_4$ déposée par plasma, et la réalisation des contacts p et n au moyen d'une métallisation de titane et d'or (Ti-Au).

Le dispositif décrit dans le dernier document cité présente pour l'application envisagée à la détection de présence de signal, plusieurs inconvénients :

- en premier lieu, le détecteur constitué par la photodiode est réalisé sur une face différente de la face du substrat sur laquelle est réalisé le guide. Ceci est un inconvénient pour la disposition du substrat dans un boîtier par exemple, ou pour tout autre dispositif de support du substrat ;
- en second lieu, le fait que le faisceau lumineux doit traverser le substrat interdit l'utilisation de substrats standard semi-isolants de grande épaisseur, de l'ordre de 330$\mu$m ;
- en troisième lieu, la lumière réfléchie par la plaquette n'est plus guidée. Ce dispositif donne donc lieu à des pertes d'autant plus importantes que le substrat est épais ;
- en quatrième lieu, le fait que dans le dispositif connu la lumière réfléchie n'est pas guidée interdit de disposer plusieurs dispositifs côte à côte. En effet, dans ces conditions chaque dispositif recevrait une partie du signal destiné aux dispositifs adjacents. Ainsi on ne peut par exemple utiliser le dispositif connu pour détecter les signaux en sortie d'un système de démultiplexage, sortie constituée par une pluralité de guides de lumière transportant des signaux de longueur d'onde différente, car l'utilisation de ce dispositif produirait un multiplexage indésirable de ces signaux ;
- en cinquième lieu, la totalité du signal transporté par le guide de lumière est obligatoirement transmise au détecteur. Cela interdit d'utiliser ce signal en dehors de cette opération de détection, le dispositif connu ne possédant qu'une voie. Ce dispositif est donc inutilisable pour la détection d'une simple présence de signal par exemple, cette détection devant être faite sans prélever la totalité du signal, ce dernier étant destiné à un autre traitement.

Le but de l'invention est de fournir un dispositif qui permet de s'affranchir de ces inconvénients.

Selon l'invention ce but est atteint à l'aide d'un dispositif tel que décrit dans le préambule, caractérisé en ce que le :

- le guide principal $G_1$ formé dans la première couche transparente $C_1$ est muni de moyens de confinement latéral pour véhiculer un signal principal à une première intensité $\phi_1$,
- la seconde couche transparente $G_2$ est disposée directement en surface de la première couche transparente C1,
- le guide intermédiaire $G_2$ est couplé au guide principal $G_1$ par couplage vertical direct, et la longueur de couplage $L_1$ est telle que l'intensité $\phi_2$, dite seconde intensité, du signal issu du guide principal $G_1$ et reçu par le guide intermédiaire $G_2$, est faible devant ladite première intensité $\phi_1$ du signal véhiculé par le guide principal $G_1$,
- la longueur de couplage $L_2$ est telle que l'intensité du signal issu du guide intermédiaire $G_2$ et reçu par le détecteur correspond à la totalité de la seconde intensité faible $\phi_2$ du signal véhiculé par ledit guide intermédiaire,
- le guide principal $G_1$ est prolongé au-delà de la région de couplage avec le guide intermédiaire, avec des moyens de confinement latéral, pour continuer à véhiculer au-delà de cette région de couplage le signal principal avec une intensité sensiblement égale à la première intensité $\phi_1$.

Ce dispositif peut être caractérisé en ce que le guide intermédiaire $G_2$ est muni de moyens de réflexion pour dévier le faisceau $\phi_1$ qu'il transporte dans une direction différente de la direction de l'axe du guide principal $G_1$, et transporter ce faisceau dévié vers le photodétecteur alors placé dans une zone du substrat éloignée du guide principal $G_1$.

Le dispositif selon l'invention présente alors entre autres les avantages suivants :

- le (ou les) guide(s) sont réalisés sur la même face du substrat que le photodétecteur, ce qui facilite d'une part l'encapsulation, et d'autre part la fabrication en synergie avec d'autres dispositifs semiconducteurs associés. En outre le substrat peut être d'une épaisseur standard ;
- la lumière est toujours guidée, ce qui permet de réaliser des dispositifs conformes à l'invention, en surface de guides de lumière rapprochés, sans craindre des multiplexages indésirables ;
- la quantité de lumière prélevée par le photodétecteur est seulement fonction des longueurs de couplage, par conséquent cette quantité de lumière peut être suffisamment faible pour ne pas perburber le fonctionnement d'un dispositif traitant par ailleurs le signal porté par le guide de lumière ;

- la quantité de lumière prélevée par le photodétecteur fournit suffisamment d'informations pour prévoir par exemple une contre-réaction d'ajustage d'électrodes de polarisation placées sur le guide de lumière ;
- le dispositif selon l'invention peut éventuellement être utilisé comme système de commutation.

L'invention sera mieux comprise à l'aide de la description suivante illustrée par les figures annexées dont :

- les figures 1 représentent un exemple de dispositif de couplage non revendiqué parmi lesquelles :
- la figure 1a représente un exemple de dispositif directement couplé à un guide de lumière vu du dessus schématiquement ;
- la figure 1b représente schématiquement une coupe transversale de ce dispositif selon l'axe II' de la figure 1a ;
- la figure 1c représente schématiquement une coupe transversale de ce dispositif selon l'axe JJ' de la figure 1a ;
- la figure 1d représente schématiquement une coupe transversale de ce dispositif selon l'axe KK' de la figure 1a ;
- les figures 2 représentent le dispositif selon l'invention dans une mise en oeuvre parmi lesquelles :
- la figure 2a représente un dispositif selon l'invention couplé à un guide de lumière au moyen d'un guide intermédiaire, vu du dessus, schématiquement ;
- la figure 2b représente schématiquement une coupe transversale de ce dispositif selon l'axe II' de la figure 2a ;
- la figure 2c représente schématiquement une coupe transversale de ce dispositif selon l'axe JJ' de la figure 2a ;
- la figure 2d représente schématiquement une coupe transversale de ce dispositif selon l'axe KK' de la figure 2a ;
- la figure 3a représente les variations, en fonction de la longueur d'onde $\lambda$, des indices de réfraction $n_1$, $n_2$, $n_3$ respectivement du composé binaire InP-$n^-$ (courbe $I_A$), du composé quaternaire $Ga_x In_{1-x}$, $AS_y P_{1-x}$ dans lequel $y \simeq 0,2$ (courbe $II_A$) et du composé quaternaire $Ga_x In_{1-x}$, $Ax_y P_{1-y}$ dans lequel $y \simeq 0,7$ (courbe $III_A$);
- la figure 3b représente les variations, en fonction de la longueur d'onde $\lambda$, des coefficients d'absorption $\alpha$ du composé binaire InP-$n^-$ (courbe $I_B$), du composé quaternaire $(Ga_x In_{1-x}, As_y P_{1-y})$ dans lequel $y \simeq 0,2$ (courbe $II_B$) et du composé quaternaire $(Ga_x In_{1-x}, As_y P_{1-y})$ dans lequel $y \simeq 0,7$ (courbe $III_B$) ;

- la figure 4a représente un interféromètre intégré du type Mach-Zender muni d'un dispositif selon l'invention ;
- les figures 4b à 4f représentent le séquencement des signaux soit en tension soit en intensité dans cet interféromètre ;
- la figure 5 représente un dispositif de démultiplexage intégré muni de dispositifs selon l'invention ;
- les figures 6a et 6b qui représentent les courbes d'égale intensité dans des coupes du dispositif selon l'invention correspondant respectivement à la figure 2c en tout début de couplage, puis après une certaine distance de couplage.

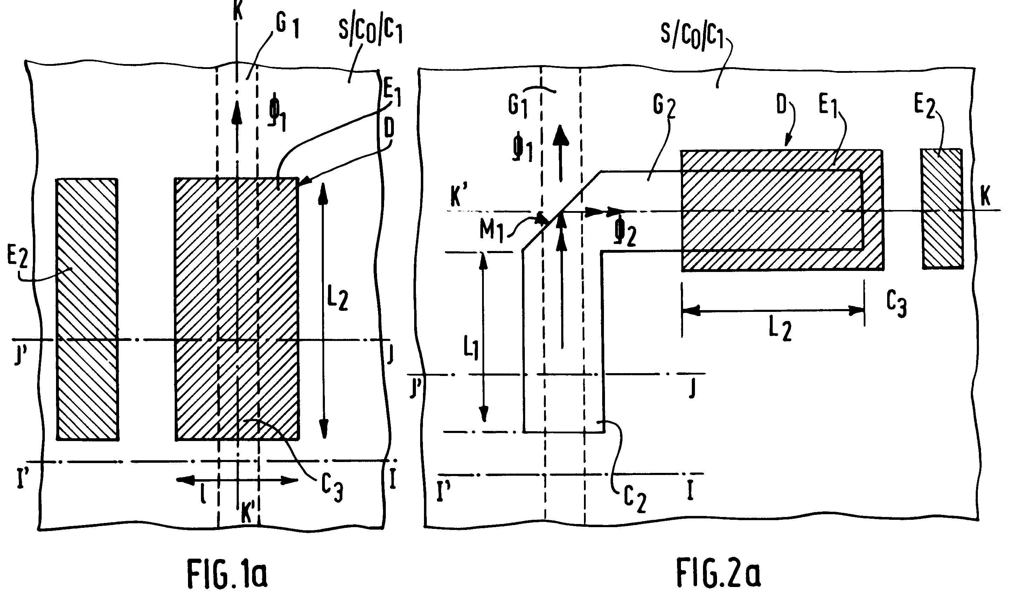

Tel que représenté à titre d'exemple schématiquement vu du dessus sur la figure 1a, un dispositif de couplage est appliqué d'une part à un guide d'onde lumineuse $G_1$ et d'autre part à un photodétecteur D.

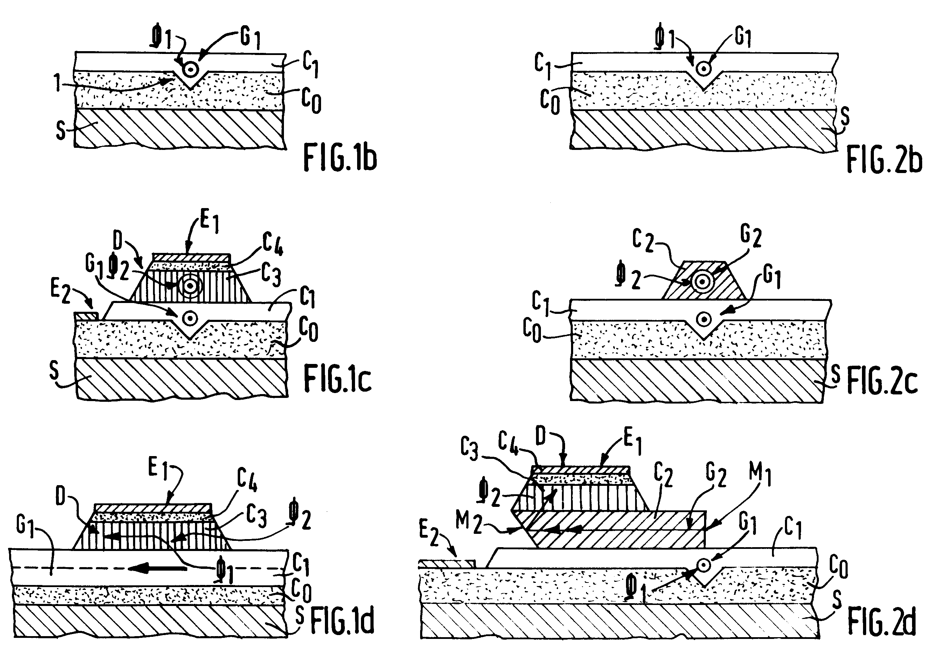

La figure 1b est une coupe transversale selon l'axe II' du dispositif représenté figure 1a. Tel que représenté schématiquement sur la figure 1b, ce dispositif comprend d'abord, formé sur l'une des faces d'un substrat semiconducteur S en un composé du groupe III-V une couche dite de confinement $C_0$, de maille cristalline compatible et d'indice de réfraction $n_0$.

Sur cette couche de confinement $C_0$ est disposée une couche $C_1$ en un composé semiconducteur du groupe III-V de maille cristalline compatible avec les précédentes et d'indice de réfraction :

$n_1 > n_0$.

Dans cette couche $C_1$ d'indice $n_1$ est formé, par exemple au moyen du procédé de réalisation décrit plus loin, un ruban constituant un guide de lumière. A cet effet le matériau formant la couche $C_1$ est en outre sélectionné parmi les composés transparents dans une bande de longueurs d'onde de fonctionnement choisie, par exemple pour les longueurs d'onde utilisées en télécommunication qui sont :

$\lambda_1 \simeq 1,3\mu m$

ou $\lambda_2 \simeq 1,55\mu m$

La figure 1c est une coupe transversale selon l'axe JJ' du dispositif représenté figure 1a. Tel que représenté schématiquement figure 1c ce dispositif comprend, réalisé en surface de la couche $C_1$, une couche $C_3$ en un composé semiconducteur du groupe III-V, de maille cristalline compatible avec les couches précédentes, et d'indice de réfraction :

$n_3 > n_1 > n_0$.

Dans cette couche supérieure $C_3$ est formé par exemple au moyen du procédé de réalisation décrit plus loin, un photodétecteur D. A cet effet le matériau formant la couche $C_3$ est en outre sélectionné parmi les composés absorbants dans le domaine de longueurs d'onde de fonctionnement choisi.

Le photodétecteur réalisé à partir de la couche $C_3$, est disposé en surface du guide d'onde $G_1$ et est couplé avec ce dernier parallèlement à son axe sur une longueur $L_2$, dite de couplage.

Compte tenu des indices différents des matériaux qui constituent ce dispositif, un signal $\phi_1$ injecté dans le guide de lumière $G_1$, passera, pour une partie $\phi_2$ fonction de la longueur de couplage $L_2$ ainsi que des indices, dans le milieu absorbant $C_3$. Ainsi selon la longueur de couplage choisie, pour des matériaux d'indice donné, la proportion $\phi_2$ de signal recueillie par le photodétecteur D, pourra varier de quelques pour cent à pratiquement cent pour cent.

La figure 1d est une coupe transversale selon l'axe KK' du dispositif de la figure 1a. Le photodétecteur comporte en outre une couche $C_4$ pour former avec la couche $C_3$ par exemple une jonction p-n, et des électrodes $E_1$ et $E_2$.

Dans ces conditions, dans le cas d'une faible proportion $\phi_2$ de signal prélevé, ce dispositif pourra être utilisé comme détecteur de présence de signal, alors que le signal $\phi_1$ lui-même sera transporté par le guide $G_1$ vers un dispositif de traitement de signal non représenté et non décrit ici. Dans ce cas, ce dispositif présente donc deux voies optiques utilisables, la première voie transportant le signal principal $\phi_1$ dans le guide de lumière $G_1$ qui est donc dit guide principal et la seconde voie transportant une portion $\phi_2$ du signal pour la détection.

Mais dans l'un et l'autre cas, c'est-à-dire soit le cas à une voie, soit le cas à deux voies, ce dispositif présente les différences et avantages notables déjà signalés :
- le guide et le détecteur sont réalisés sur la même face du substrat ;
- la lumière ne traverse pas le substrat ;
- la lumière est toujours guidée.

Tel que représenté schématiquement vu du dessus sur la figure 2a, selon l'invention, le dispositif de couplage est appliqué d'une part à un guide d'onde $G_2$ dit guide intermédiaire, et d'autre part à un photodétecteur D. Le guide d'onde intermédiaire $G_2$ est lui-même couplé parallèlement à son axe et sur une longueur $L_1$, dite de couplage, au guide principal $G_1$ qui transporte un signal dans un domaine de longueurs d'onde choisi par exemple autour de :

$\lambda_1 \simeq 1,3\mu m$

ou $\lambda_2 \simeq 1,55\mu m$

correspondant aux standards utilisés en télécommunication.

La figure 2b est une coupe transversale selon l'axe II' du dispositif représenté figure 2a. A ce niveau le dispositif comprend des couches qui présentent les mêmes caractéristiques que montré figure 1b.

La figure 2c est une coupe transversale selon l'axe JJ' du dispositif représenté figure 2a. Tel que représenté schématiquement figure 2c, ce dispositif comprend, réalisée en surface de la couche $C_1$, une couche $C_2$ en un matériau semiconducteur du groupe III-V de maille cristalline compatible avec les couches précédentes et d'indice de réfraction :

$$n_2 > n_1 > n_0.$$

Dans cette couche $C_2$ est formé, par exemple au moyen du procédé de réalisation décrit plus loin, le guide d'onde $G_2$ dit guide intermédiaire. A cet effet, le matériau constituant la couche $C_2$ est sélectionné parmi les composés transparents dans le domaine de longueurs d'onde de fonctionnement choisi.

La figure 2d est une coupe transversale selon l'axe KK' du dispositif de la figure 2a. Tel que représenté schématiquement sur la figure 2d, ce dispositif comprend en outre une couche $C_3$ réalisée en surface de la couche $C_2$, en un composé semiconducteur du groupe III-V, compatible avec les couches précédentes, et d'indice de réfraction :

$$n_3 > n_2 > n_1 > n_0.$$

Dans cette couche supérieure $C_3$ est formé comme il a été dit précédemment le photodétecteur D. Le matériau formant la couche $c_3$ est donc sélectionné parmi les composés absorbants dans le domaine de longueurs d'onde choisi. Le photodétecteur réalisé à partir de la couche $C_3$ est disposé en surface du guide d'onde intermédiaire $G_2$ et est couplé avec ce dernier parallèlement à son axe sur une longueur de couplage $L_2$.

Compte tenu des indices différents des matériaux qui constituent ce dispositif, un signal $\phi_1$ injecté dans le guide principal $G_1$, passera pour une partie $\phi_2$ fonction de la longueur de couplage $L_1$, dans le guide intermédiaire $G_2$. La proportion de signal $\phi_2$ recueillie par le guide intermédiaire $G_2$ peut varier de quelques pour cent à pratiquement cent pour cent.

Cependant le principal intérêt de ce mode de réalisation du dispositif selon l'invention, réside dans la possibilité de pouvoir prélever seulement une faible partie $\phi_2$ du signal $\phi_1$, cette partie $\phi_2$ étant alors transportée par le guide intermédiaire $G_2$ en direction du photodétecteur, et la longueur de couplage $L_2$ entre le photodétecteur D et le guide intermédiaire $G_2$ étant alors choisie telle que la totalité du signal $\phi_2$ passe dans le photodétecteur.

Ce mode de réalisation est particulièrement intéressant pour transporter la partie $\phi_2$ du signal $\phi_1$ dans une zone du substrat éloignée du guide principal $G_1$, et dans laquelle est réalisé le photodétecteur D. Le dispositif selon l'invention présente ainsi, sur les dispositifs connus de l'état de la technique, en plus des avantages cités plus haut, l'avantage que le signal $\phi_1$ reste utilisable pour l'application à laquelle il était primitivement destiné, en général un transport d'informations codées.

A cet effet, comme il a été dit, le guide intermédiaire $G_2$ est d'abord couplé comme il est montré figure 2a, au guide principal $G_1$ sur une longueur $L_1$. Mais ce guide intermédiaire $G_1$ est muni à l'extrémité de la longueur de couplage $L_1$ d'une facette-miroir $M_1$ pour dévier le faisceau $\phi_2$ par réflexion, vers le photodétecteur D, dans une direction différente de la direction de l'axe du guide principal $G_1$.

Eventuellement, le guide intermédiaire $G_2$ peut même être muni de plusieurs facettes-miroirs pour dévier par des réflexions, le faisceau $\phi_2$, selon un chemin complexe, vers le photodétecteur D.

Tel que représenté en coupe sur la figure 2d, pour constituer le photodétecteur D, une couche $C_4$ est formée en surface de la couche absorbante $C_3$ pour réaliser avec cette dernière une jonction p-n, et ces couches sont munies d'électrodes $E_1$ et $E_2$.

Afin d'améliorer le rendement du dispositif formé par le couplage entre le guide intermédiaire $G_2$ et le photodétecteur D, dans ce mode de réalisation de l'invention, le guide intermédiaire $G_2$ peut être muni en son extrémité d'une facette-miroir $M_2$ qui réfléchit le flux $\phi_2$ en direction de la couche absorbante $C_3$.

Dans une mise en oeuvre du dispositif selon l'invention, le substrat S est un composé binaire $A_{III}$-$B_V$ dans lequel A est l'élément indium (In) et B est l'élément phosphore (P) formant le phosphure d'indium (InP). Ce substrat peut être rendu semi-isolant par une dopage au moyen de l'ion Fe.

Dans cette mise en oeuvre, la couche de confinement $C_0$ est un composé $A_{III}$-$B_V$ $n^+$, qui peut être du phosphure d'indium (InP) à quelques $10^{18}$ impuretés par $cm^3$, et la couche $C_1$ formant le guide principal $G_1$ est un composé $A_{III}$-$B_V$ $n^-$ qui peut être du phosphure d'indium (InP) non dopé intentionnellement. Ce matériau est alors transparent pour la longueur d'onde :

$$\lambda_1 \simeq 1,3 \mu m$$

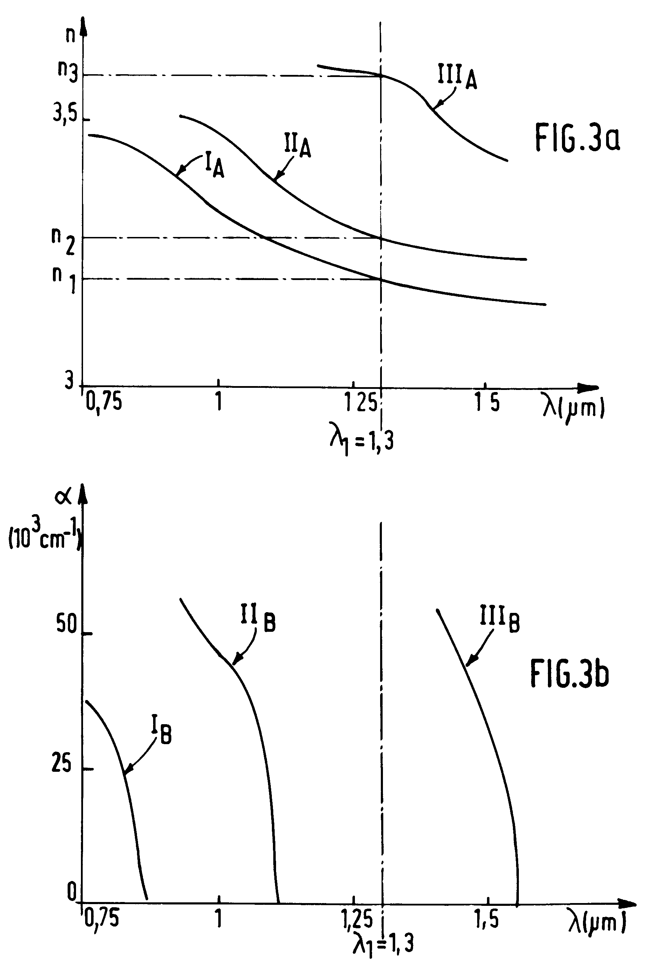

comme il apparaît d'après la courbe $I_B$ de la figure 3b qui donne les coefficients d'absorption $\alpha$ en fonction de la longueur d'onde $\lambda$. Ce matériau présente d'autre part l'indice de réfraction représenté sur la figure 3a par la courbe $I_A$, en fonction de la longueur d'onde $\lambda$, de valeur $n_1$ pour la longueur d'onde $\lambda_1 \simeq 1,3 \mu m$.

Le matériau composant la couche absorbante $C_3$ peut être avantageusement un composé ternaire ($A_{III}$ $X_{III}$, $Y_V$) dans lequel A est l'indium (In), X est le gallium (Ga) et Y est l'arsenic (As), c'est-à-dire GaInAs. Ce matériau peut également être avantageusement tout composé quaternaire de formule ($A_{III}$ $X_{III}$, $B_V$ $Y_V$) dans lequel A est l'indium (In), X est le gallium (Ga), Y est l'arsenic (As) et B est le phosphore (P), et de composition ($Ga_x$ $In_{1-x}$,

$As_yP_{1-y}$) dans laquelle la concentration y est de l'ordre de 0,7 ou supérieur à 0,7. En effet la courbe $III_A$ de la figure 3a qui représente les variations de l'indice de réfraction de ce composé quaternaire en fonction de la longueur d'onde, montre qu'à $\lambda_1$ = 1,3$\mu$m cet indice $n_3$ est suffisamment supérieur à l'indice $n_1$ du guide $G_1$. D'autre part la courbe $III_B$ de la figure 3b qui représente le coefficient d'absorption $\alpha$ de ce composé en fonction de la longueur d'onde, montre qu'à $\lambda_1$ = 1,3$\mu$m ce composé présente une absorption suffisamment importante pour que la fonction détection soit réalisable.

Des courbes des figures 3a et 3b, on peut déduire en outre que l'indice de réfraction du composé ternaire GaInAs sera supérieur à l'indice du composé quaternaire $Ga_xIn_{1-x}As_yP_{1-y}$ dans lequel y ≥ 0,7, et que l'absorption dudit composé ternaire sera supérieure à l'absorption dudit composé quaternaire. On déduira d'autre part que les composés quaternaires de formule $Ga_xIn_{1-x}As_yP_{1-y}$ dans lesquels 0,7 < y ≦ 1 présenteront des indices et des coefficients d'absorption de valeurs comprises entre celles correspondant audit composé ternaire et audit composé quaternaire. Ceci permet de définir un ensemble de composés qui peuvent être avantageusement utilisés pour former la couche absorbante $C_3$ destinée à réaliser le détecteur D.

Le matériau composant la couche transparente $C_2$, pour former le guide intermédiaire $G_2$ peut être avantageusement un composé quaternaire ($A_{III}X_{III}$, $B_V Y_V$) dans lequel A est l'indium (In), X est le gallium (Ga), Y est l'arsenic (As), et B est le phosphore (P) de composition ($Ga_xIn_{1-x}$, $As_yP_{1-y}$) dans laquelle la concentration y est de l'ordre de 0,2. En effet la courbe $II_A$ de la figure 3a, qui représente les variations de l'indice de réfraction de ce composé quaternaire montre que, pour la longueur d'onde $\lambda_1$ = 1,3$\mu$m, son indice de réfraction $n_2$ est tel que :

$n_1 < n_2 < n_3$.

D'autre part la courbe $II_B$ de la figure 3b, qui représente les variations du coefficient d'absorption de ce composé quaternaire, montre qu'il est transparent pour la longueur d'onde $\lambda_1$ = 1,3$\mu$m.

Des courbes des figures 3a et 3b, on peut déduire en outre que d'autres composés quaternaires peuvent être choisis pour constituer la couche transparente $C_2$ en choisissant y = 0,2, mais tel que, pour les indices, la relation :
$n_1 < n_2 < n_3$ soit obtenue,
et que le coefficient d'absorption corresponde à un domaine de transparence pour la longueur d'onde de fonctionnement choisie. On pourra avoir par exemple 0,1 ≦ y < 0,7. Enfin, si l'autre standard de longueur d'onde $\lambda_2$ = 1,55$\mu$m doit être utilisé, les courbes de la figure 3 permettent de choisir des composés de formule appropriée à remplir les conditions définies plus haut pour former les couches $C_1$, $C_2$, $C_3$.

La couche $C_4$ destinée à former avec la couche $C_3$ une jonction p-n pour constituer le photodétecteur D, peut être avantageusement obtenue par la diffusion d'ions tels que Zn ou Cd dans une zone de la couche $C_3$, zone en surface de laquelle est alors réalisée une électrode de contact $E_1$ par tout moyen connu de l'état de la technique par exemple à l'aide d'une multicouche Ti-Pt-Au. Le fonctionnement du photodétecteur nécessite une seconde électrode $E_2$ qui peut être réalisée dans une zone laissant apparaître la couche $C_0$, cette zone étant par exemple dégagée au moyen d'une gravure des couches supérieures et recevant le dépôt par exemple d'une multicouche Au-Ge-Ni.

Il est également possible de réaliser le dispositif selon l'invention directement sur un substrat de composition conforme à la composition décrite pour la couche de confinement $C_0$. Dans ce cas, il est possible de réaliser le second contact $E_2$ du détecteur sur la face arrière du substrat.

### Exemple I d'application de l'invention

Pour mettre en oeuvre cette première application de l'invention proposée à titre d'exemple, on utilise le dispositif selon l'invention, dans les cas où les longueurs de couplage sont prévues telles que seulement une faible partie du signal est recueillie par le photodétecteur D, la plus grande partie du signal continuant de se propager dans le guide $G_1$.

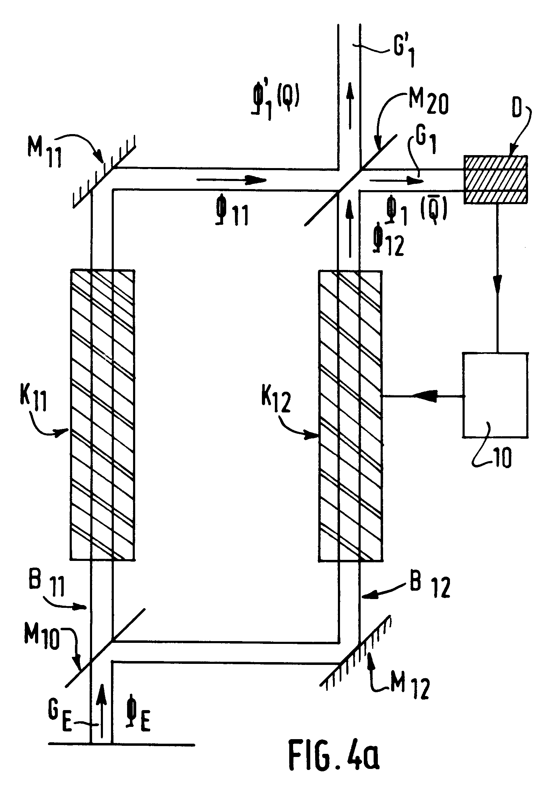

Cette première application de l'invention est illustrée par la figure 4a. Cette figure 4a montre un interféromètre Mach-Zender qui est entièrement et monolithiquement intégré sur un substrat monocristallin semiconducteur S, selon une technologie décrite dans la demande de brevet européen 0 179 507. Cet interféromètre comprend un guide d'onde lumineuse $G_E$ dans lequel est injecté un signal $\phi_E$ en lumière monocromatique de longueur d'onde par exemple $\lambda_1$ = 1,33$\mu$m.

Ce faisceau $\phi_2$ rencontre une lame semi-réfléchissante $M_{10}$ qui partage le faisceau $\phi_E$ en deux faisceaux d'égale amplitude $\phi_{11}$ et $\phi_{12}$. La distance optique parcourue par les faisceaux $\phi_{11}$ et $\phi_{12}$ dans les branches $B_{11}$ et $B_{12}$, avant d'être recombinés par la lame semi-réfléchissante $M_{20}$, est la même. Ces trajets dans les branches $B_{11}$ et $B_{12}$ sont soumis d'une part à une réflexion par un miroir totalement réfléchissant $M_{11}$ et $M_{12}$ respectivement et à l'action d'un champ électrique par l'une des deux électrodes $K_{11}$ ou $K_{12}$, une différence de potentiel étant appliquée à cet effet entre l'une de ces électrodes par exemple $K_{12}$ et une électrode de masse prise sur le substrat par exemple, l'autre électrode par exemple $K_{11}$ n'étant réalisée que pour symétriser le montage et étant donc reliée à la masse.

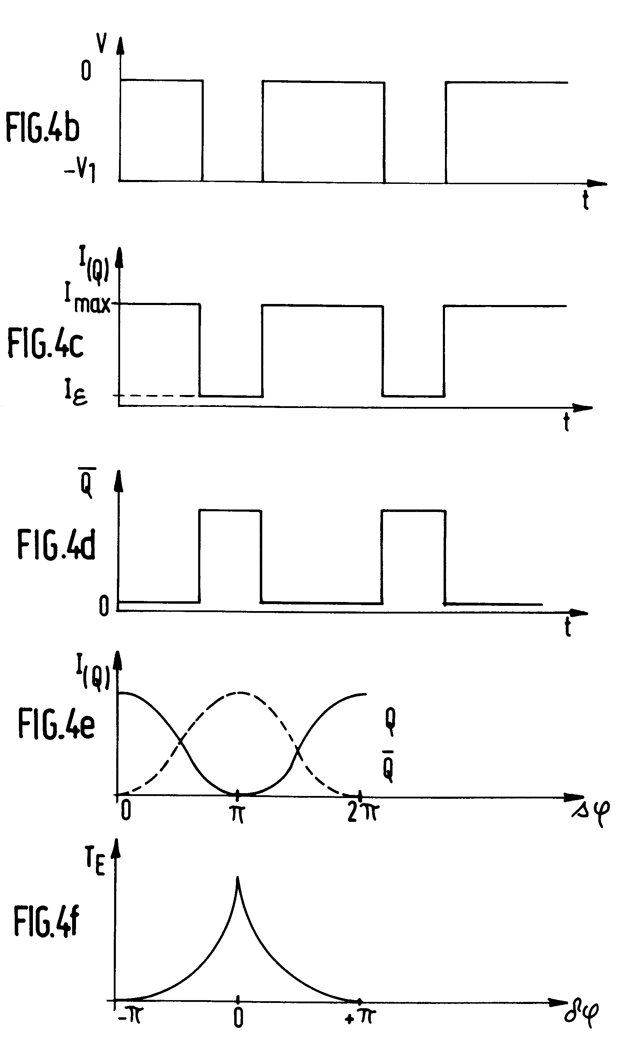

La figure 4b montre les variations de la tension $V_1$ appliquée à l'électrode $K_{12}$, en fonction du temps t. La figure 4c montre les variations de l'intensité optique $I_{(Q)}$ en fonction du temps, qui sont induites par les variations de la tension $V_1$.

La figure 4d montre alors la forme du signal $\overline{Q}$ codant le faisceau $\phi_1$ dans la branche de sortie $G_1$, le signal $\overline{Q}$ étant le complémentaire du signal Q codant le faisceau $\phi'_1$ dans la branche de sortie $G'_1$. La figure 4e montre les variations de l'intensité optique $I_{(Q)}$ des signaux Q et $\overline{Q}$ dans les branches de sortie $G_1$ et $G'_1$ en fonction du déphasage $\Delta\phi$. Enfin la figure 4f montre les variations du taux d'extinction

$$T_E = \frac{I_{max}}{I_E} = \frac{I_{(Q)}}{I_{(\overline{Q})}}$$

en fonction de l'erreur de déphasage $\delta\phi$ entre $I_Q$ et $\overline{I_Q}$.

La comparaison des figures 4e et 4f montre que si un très petit déphasage supplémentaire $\delta\phi$ apparaît entre $I_Q$ et $\overline{I_Q}$ qui devraient théoriquement se trouver en opposition de phase, alors le taux d'extinction $T_E$ diminue très rapidement et en fait l'extinction ne peut plus être obtenue. Ceci peut être dû à la dérive des tensions de polarisation des électrodes $K_{11}$ ou $K_{12}$ par exemple en fonction des variations de température.

En plaçant un dispositif selon l'invention sur l'une des branches de sortie de l'interféromètre, on peut détecter soit la non-extinction, soit plus facilement la non-atteinte d'un maximum et agir au moyen d'un dispositif 10 non décrit ici, pour rectifier la valeur de la (ou des) tension(s) sur la (ou les) électrode(s) $K_{11}$ (et $K_{12}$).

### Exemple II d'application de l'invention

Il est connu de l'état de la technique, par la publication par Alain CARENCO dans EIE (21, rue d'Assas, Paris), un bistable optique qui comprend d'une part deux guides de lumière intégrés sur un substrat semiconducteur et couplés latéralement au moyens d'électrodes, et qui comprend d'autre part un détecteur de signal, lequel n'est pas intégré.

Une amélioration à ce bistable peut être apportée en réalisant le détecteur conformément à l'invention.

### Exemple III d'application de l'invention

Le dispositif selon l'invention peut être utilisé, dans le cas où les longueurs de couplage sont prévues pour que tout le signal d'entrée soit recueilli par le détecteur, pour prélever en sortie de guides d'onde des signaux démultiplexés, non pas verticalement mais horizontalement.

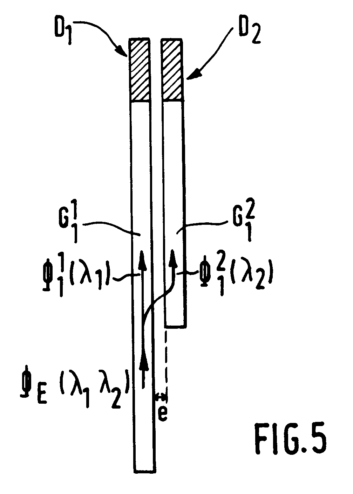

Cette application est illustrée par la figure 5. Cette figure 5 représente vu du dessus, réalisés monolithiquement intégrés sur un substrat semiconducteur, deux ou plusieurs guides $G_1^1$, $G_1^2$ etc, transportant chacun des faisceaux monocromatiques de longueur d'onde respectivement $\lambda_1$, $\lambda_2$, etc.

Ces faisceaux peuvent provenir d'un guide unique d'entrée $G_E$ transportant ainsi un signal $\phi_E$ multiplexé, qui peut être démultiplexé du fait que les signaux de longueur d'onde $\lambda_1$, $\lambda_2$ etc passent sélectivement dans les guides $G_1^1$, $G_1^2$ etc respectivement, par couplage, du fait que l'indice de réfraction des guides $G^1$, $G^2$ est précisément prévu pour favoriser la propagation à ces longueur d'onde.

Du fait de l'intégration d'une part, et pour permettre le couplage sélectif d'autre part, les guides $G_1^1$, $G_1^2$ sont réalisés sur le substrat d'une façon rapprochée. Des photodétecteurs $D_1$, $D_2$ etc placés sur les guides $G_1^1$, $G_1^2$ conformément à l'invention, permettent de détecter les signaux respectifs transportés, sans risque d'un nouveau multiplexage.

Ce résultat ne pourrait être obtenu au moyen du dispositif cité en dernier comme état de la technique, car un nouveau multiplexage des signaux se produirait à la traversée du substrat, entre les guides et les détecteurs du fait que pendant cette traversée du substrat les signaux ne sont plus guidés.

### Procédé de réalisation du dispositif selon l'invention

Tout à fait à titre d'exemple, un procédé de réalisation avantageux de l'invention est décrit ci-après.

Ce procédé met en oeuvre la croissance épitaxiale en phase vapeur (VPE) ou la croissance épitaxiale en phase liquide (LPE), la croissance VPE étant cependant préférée.

Sur un substrat S monocristallin orienté, est ainsi réalisée la première couche $C_0$ dite de confinement. Puis une cannelure 1 est pratiquée dans la couche $C_0$ par gravure anisotrope de façon à ce que cette cannelure présente des parois longitudinales formées par des facettes cristallines (voir figures 1b et 2b);

Ensuite la couche $C_1$ est réalisée en surface de la couche $C_0$ de préférence par croissance VPE. En effet, par ce procédé la vitesse de croissance à partir des parois longitudinales de la cannelure peut être plus élevée que la vitesse de croissance sur la surface supérieure de la couche $C_0$. C'est pourquoi grâce à la croissance VPE la surface supérieure de la couche $C_1$ va être de type PLANAR. Un tel résultat pourrait plus difficilement être obtenu avec les types de croissance dits MOVPE ou MBE qui constituent le plus souvent des couches d'épaisseur uniforme, ne permettant donc pas d'obtenir une structure PLANAR sur une cannelure. Les cannelures ainsi remplies par la couche $C_1$ forment les guides $G_1$.

Puis dans l'ouverture de masques appropriés les guides $G_2$ sont réalisés par croissance épitaxiale localisée. Les guides $G_2$ croissent alors sous forme de rubans, en relief sur la couche $C_1$, et présentent des faces longitudinales formées de facettes cristallographiques. Cette méthode permet d'obtenir de la même façon des miroirs $M_1$ formés de facettes cristallographiques.

Enfin dans l'ouverture de masques appropriés les détecteurs D sont réalisés par croissance épitaxiale localisée, en relief sur les guides $G_1$ ou $G_2$, et présentent alors des faces longitudinales et terminales formées de facettes cristallographiques. Cette méthode permet d'obtenir de la même façon des miroirs $M_2$ formés de facettes cristallographiques.

Les couches $C_4$ et les électrodes $E_1$ et $E_2$ sont alors réalisées d'une façon connue de l'état de la technique.

Par ce procédé de réalisation incluant la gravure anisotrope et l'épitaxie localisée, la lumière est particulièrement bien confinée dans les guides et dans les détecteurs et les pertes sont aussi faibles que possible, ces pertes étant d'ailleurs diminuées, par rapport au dispositif connu de l'état de la technique, du fait que la lumière est toujours guidée.

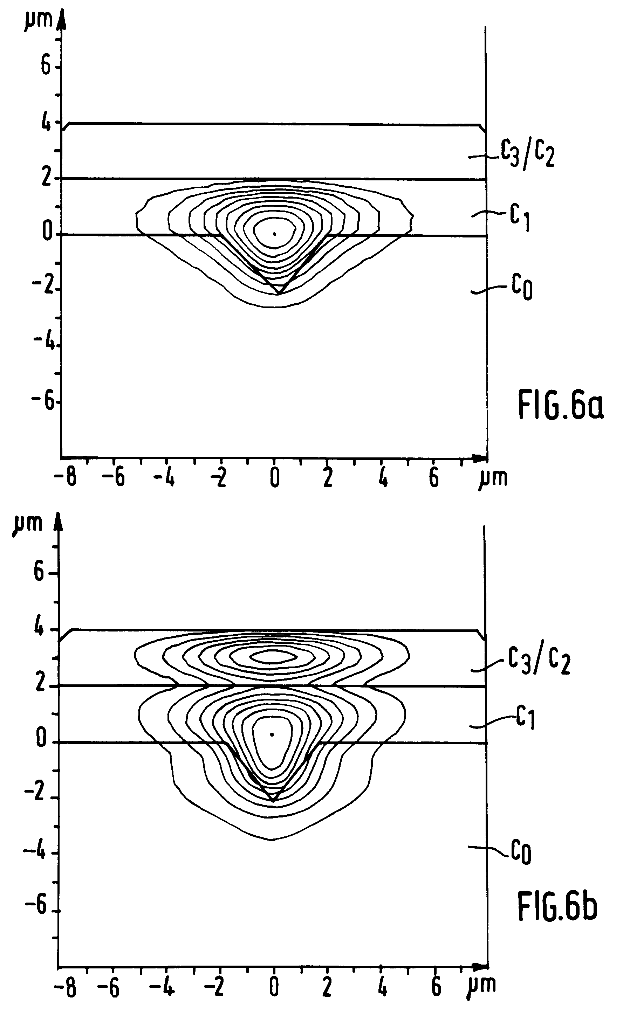

Les figures 6a et 6b illustrent la propagation de la lumière dans le dispositif selon l'invention.

La figure 6a montre les courbes d'égale intensité dans le dispositif représenté en coupe figure 1c ou 2c en tout début du couplage, et permettent de juger de la localisation de la lumière dans le guide $G_1$.

La figure 6b montre les courbes d'égale intensité dans le dispositif représenté en coupe figure 1c ou 2c après une certaine distance de couplage, et permettent de juger de la localisation de la lumière qui passe par couplage du guide $G_1$ dans le détecteur D ou dans le guide $G_2$.

On notera en outre que le dispositif selon l'invention peut aussi être obtenu par un procédé mettant en oeuvre la croissance épitaxiale non localisée, suivie de gravures sélectives dans les ouvertures de masques de formes appropriées. Une telle technique est à ce jour classique pour l'homme du métier.

Enfin dans ce dernier procédé de réalisation, si le substrat est d'une composition identique à celle préconisée pour la couche de confinement $C_0$, le dispositif conforme aux figures 1 peut être réalisé en une seule étape d'épitaxie.

## Revendications

1. Dispositif semiconducteur intégré, du type dispositif de couplage entre un photodétecteur D et un guide d'onde lumineuse, ce photodétecteur fonctionnant dans une bande de longueurs d'ondes donnée et ce dispositif comportant, en surface d'un substrat semiconducteur en un composé III-V, des couches de composés III-V parmi lesquelles:

   - une couche $C_0$ de confinement d'indice de réfraction $n_0$,
   - une couche $C_1$ transparente pour ladite bande de longueurs d'onde, dite première couche transparente, qui est réalisée en surface de la couche de confinement $C_0$, et qui présente un indice de réfraction $n_1$ supérieur à l'indice $n_0$ de la couche de confinement, couche $C_1$ dans laquelle est formé un guide $G_1$ dit guide principal,
   - une couche $C_2$ transparente pour ladite bande de longueurs d'onde, dite seconde couche transparente, qui présente un indice de réfraction $n_2$ supérieur à l'indice $n_1$ de la première couche transparente, couche $C_2$ dans laquelle est formé un guide $G_2$ dit guide intermédiaire, couplé avec le guide principal sur une longueur $L_1$ dite de couplage,
   - une couche $C_3$, dite couche absorbante pour ladite bande de longueurs d'onde, disposée directement sur la seconde couche transparente qui présente un indice de réfraction $n_3$ supérieur à l'indice $n_2$ de la seconde couche transparente, et qui est surmontée d'une couche $C_4$, les couches $C_3$ et $C_4$ ayant des types de conductivité opposés et formant une jonction p-n qui constitue l'élément photodétecteur D couplé avec le guide intermédiaire G2 par couplage vertical direct sur une longueur $L_2$ dite de couplage,

   **caractérisé en ce que**
   - le guide principal $G_1$ formé dans la première couche transparente $C_1$ est muni de moyens de confinement latéral pour véhiculer un signal principal à une première intensité $\phi_1$,
   - la seconde couche transparente $C_2$ est disposée directement en surface de la première couche transparente $C_1$,
   - le guide intermédiaire $G_2$ est couplé au guide principal $G_1$ par couplage vertical direct, et la longueur de couplage $L_1$ est telle que l'intensité $\phi_2$, dite seconde in-

tensité, du signal issu du guide principal $G_1$ et reçu par le guide intermédiaire $G_2$, est faible devant ladite première intensité $\phi_1$ du signal véhiculé par le guide principal $G_1$,

- la longueur de couplage $L_2$, est telle que l'intensité du signal issu du guide intermédiaire $G_2$ et reçu par le détecteur correspond à la totalité de la seconde intensité faible $\phi_2$ du signal véhiculé par ledit guide intermédiaire,

- le guide principal $G_1$ est prolongé au-delà de la région de couplage avec le guide intermédiaire, avec des moyens de confinement latéral, pour continuer à véhiculer au-delà de cette région de couplage le signal principal avec une intensité sensiblement égale à la première intensité $\phi_1$.

2. Dispositif semiconducteur intégré selon la revendication 1, caractérisé en ce que le guide intermédiaire $G_2$ est muni de moyens de réflexion pour dévier le faisceau $\phi_1$ qu'il transporte dans une direction différente de la direction de l'axe du guide principal $G_1$, et transporter ce faisceau dévié vers le photodétecteur alors placé dans une zone du substrat éloignée du guide principal $G_1$.

3. Dispositif selon la revendication 2, caractérisé en ce que le guide intermédiaire $G_2$ est muni à l'extrémité de la longueur $L_1$ de couplage d'une facette miroir $M_1$ pour réfléchir la lumière en direction du photodétecteur, alors placé dans une zone éloignée du guide $G_1$.

4. Dispositif selon la revendication 3, caractérisé en ce que la facette-miroir $M_1$ est une facette cristallographique.

5. Dispositif selon l'une des revendications 1 à 4, caracérisé en ce que le guide intermédiaire $G_2$ est muni à l'extrémité de la longueur de couplage $L_2$ d'une facette miroir $M_2$ pour réfléchir la lumière en direction de la couche absorbante $C_3$ du photodétecteur D.

6. Dispositif selon la revendication 5, caractérisé en ce que la facette-miroir $M_2$ est une facette cristallographique.

7. Dispositif selon l'une des revendications 1 à 6, caractérisé en ce que les faces longitudinales du ou des guides d'onde lumineuse ainsi que les faces du détecteur sont limitées par des facettes cristallographiques.

8. Dispositif selon l'une des revendications 1 à 7, caractérisé en ce que le substrat S est en un composé $A_{III}B_V$ dans lequel A est par exemple l'élément indium In et B est par exemple l'élément phosphore P, en ce que la couche de confinement est en ce composé $A_{III}B_V$ de type de conductivité $n^+$, en ce que la première couche transparente $C_1$ est en ce composé $A_{III}B_V$ de type de conductivité $n^-$, et en ce que la couche absorbante $C_3$ est en un composé $(A_{III}X_{III}, B_V Y_V)$ dans lequel A est par exemple l'élément gallium (Ga), a est par exemple l'élément phosphore (P) et Y est par exemple l'élément arsenic (As) formant ainsi un composé quaternaire de formule $(GaIn, As_y P_{1-y})$ dans laquelle la concentration y est choisie pour obtenir des propriétés absorbantes du composé à la longueur d'onde de fonctionnement choisie.

9. Dispositif selon la revendication 8, caractérisé en ce que pour la longueur d'onde de fonctionnement choisie $\lambda_1$ = 1,3 $\mu$m, la concentration y est liée par la relation $0,7 \leq y < 1$.

10. Dispositif selon l'une des revendications 7 ou 8, caractérisé en ce que la seconde couche transparente $C_2$ est en composé $(A_{III}X_{III}, B_V Y_V)$ dans lequel par exemple A est l'indium (In), X est le gallium (Ga), B est le phosphore (P) et Y est l'arsenic (As) formant ainsi un composé quaternaire de formule $(GaIn, As_y P_{1-y})$ dans laquelle la concentration y est choisie pour obtenir des propriétés de transparence pour la longueur d'onde de fonctionnement choisie.

11. Dispositif selon la revendication 10, caractérisé en ce que pour la longueur d'onde de fonctionnement choisie $\lambda_1$ = 1,3 $\mu$m, la concentration y est liée par la relation $0,7 \leq y < 1$.

**Claims**

1. Integrated coupling semiconductor device for coupling between a photodetector D and a light waveguide, this photodetector operating in a given band of wavelengths and this device comprising, on top of a semiconductor substrate of a III-V compound, layers of III-V compounds among which:

- a confinement layer $C_0$ having an index of refraction $n_0$,
- a transparent layer $C_1$ for said wavelength band, called first transparent layer, disposed on top of the confinement layer $C_0$ and having an index of refraction $n_1$ that is higher than the index $n_0$ of the confinement layer, in which

layer $C_1$ is formed a waveguide $G_1$ called main waveguide,

- a transparent layer $C_2$ for said wavelength band, called second transparent layer, this layer having an index of refraction $n_2$ that is higher than the index $n_1$ of the first transparent layer, in which layer $C_2$ is formed a waveguide $G_2$ called intermediate waveguide which is coupled to the main waveguide over a length $L_1$ called coupling length,

- a layer $C_3$, called absorbing layer for said wavelength band and disposed directly on the second transparent layer, having an index of refraction $n_3$ that is higher than the index $n_2$ of the second transparent layer, and being covered by a layer $C_4$, the layers $C_3$ and $C_4$ being of opposite conductivity types and forming a p-n junction which constitutes a photodetector element D coupled with the intermediate waveguide $G_2$ by direct vertical coupling over a length $L_2$ called coupling length, characterized in that:

- the main waveguide $G_1$ formed in the first transparent layer $C_1$ has lateral confining means for conveying a main signal of a first intensity $\phi_1$,

- the second transparent layer $C_2$ is disposed directly on top of the first transparent layer $C_1$,

- the intermediate waveguide $G_2$ is coupled to the main waveguide $G_1$ by direct vertical coupling, and the coupling length $L_1$ is such that the intensity $\phi_2$, called second intensity, of the signal coming from the main waveguide $G_1$ and received by the intermediate waveguide $G_2$ is small compared to said first intensity $\phi_1$ of the signal conveyed by the main waveguide $G_1$,

- the coupling length $L_2$ is such that the intensity of the signal coming from the intermediate waveguide $G_2$ and received by the detector corresponds to the whole second intensity $\phi_2$ of the signal conveyed by said intermediate waveguide,

- the main waveguide $G_1$ is lengthened to beyond the coupling region with the intermediate waveguide by lateral confining means to continue to convey the main signal to beyond this coupling region with an intensity that is substantially equal to the first intensity $\phi_1$.

2. Integrated semiconductor device as claimed in Claim 1, characterized in that the intermediate waveguide $G_2$ comprises reflection means to deviate the light beam $\phi_1$ it conveys in a direction that differs from the direction of the axis of the main waveguide $G_1$, and to convey this deviated light beam to the photodetector located in a substrate region that is remote from the main waveguide $G_1$.

3. Integrated semiconductor device as claimed in Claim 2, characterized in that the intermediate waveguide $G_2$ comprises a reflecting facet $M_1$ at the end of the coupling length $L_1$ for reflecting the light in the direction of the photodetector, thus positioned in a region remote from the main waveguide $G_1$.

4. Device as claimed in Claim 3, characterized in that the mirror facet $M_1$ is a crystallographic facet.

5. Device as claimed in one of the Claims 1 to 4, characterized in that at the end of the coupling length $L_2$ the intermediate waveguide $G_2$ comprises a mirror facet $M_2$ for reflecting the light in the direction of the absorbing layer $C_3$ of the photodetector D.

6. Device as claimed in Claim 5, characterized in that the mirror facet $M_2$ is a crystallographic facet.

7. Device as claimed in one of the Claims 1 to 6, characterized in that the longitudinal faces of the light waveguide(s) as well as the faces of the detector are limited by crystallographic facets.

8. Device as claimed in one of the Claims 1 to 7, characterized in that the substrate S is an $A_{III}$-$B_V$ compound in which A is, for example, the indium element In and B is, for example, the phosphorus element P, in that the confinement layer is an $A_{III}$-$B_V$ compound of conductivity type $n^+$, in that the first transparent layer $C_1$ an $A_{III}$-$B_V$ compound of conductivity type $n^-$, and in that the absorbing layer $C_3$ is an $(A_{III} X_{III}, B_Y Y_V)$ compound in which A is, for example, gallium (Ga), B is, for example, phosphorus (P) and Y is, for example, arsenic (As) thus forming a quaternary compound of the formula $(GaIn, As_y P_{1-y})$ in which the y concentration is selected to obtain absorbing properties of the compound with the chosen operating wavelength.

9. Device as claimed in Claim 8, characterized in that for the chosen operating wavelength $\lambda_1 = 1.3 \ \mu m$ the y concentration is bound by the relation $0.7 \leqq y < 1$.

**10.** Device as claimed in one of the Claims 7 or 8, characterized in that the second transparent layer $C_2$ is an $(A_{III}X_{III}, B_V Y_V)$ compound in which, for example, A is indium (In), X is gallium (Ga), B is phosphorus (P) and Y is arsenic (As) thus forming a quaternary compound of formula $(GaIn, As_y P_{1-y})$ in which the y concentration is selected to obtain transparency properties for the chosen operating wavelength.

**11.** Device as claimed in Claim 10, characterized in that for the chosen operating wavelength $\lambda_1$ = 1.3 $\mu$m the y concentration is bound by the relation $0.7 \leq y < 1$.

## Patentansprüche

**1.** Integrierte Halbleiteranordnung in Form einer Kopplungsanordnung zwischen einem Photodetektor D und einem Lichtwellenleiter, wobei der Photodetektor in einem gegebenen Wellenlängenbereich funktioniert und wobei diese Anordnung auf einer Oberfläche eines Halbleitersubstrats einer Zusammensetzung III-V Schichten der Zusammensetzung III-V aufweist, worunter:
- eine Begrenzungsschicht $C_0$ mit der Brechzahl $n_0$,
- eine Schicht $C_1$, die für den genannten Wellenlängenbereich transparent ist und als erste transparente Schicht bezeichnet wird, die auf der Oberfläche der Begrenzungsschicht $C_0$ vorgesehen ist und die eine Brechzahl $n_1$ aufweist, die höher ist als die Brechzahl $n_0$ der Begrenzungsschicht $C_1$, in der ein Leiter $G_1$ vorgesehen ist, der als Hauptleiter bezeichnet wird,
- eine Schicht $C_2$, die für den genannten Wellenlängenbereich transparent ist und als zweite transparente Schicht bezeichnet wird, die eine Brechzahl $N_2$ aufweist, die höher ist als die Brechzahl $n_1$ der ersten transparenten Schicht, wobei in der Schicht $C_2$ ein Leiter $G_2$ vorgesehen ist, der als Zwischenleiter bezeichnet wird und über eine Länge $L_1$, die als Kopplungslänge bezeichnet wird, mit dem Hauptleiter gekoppelt ist,
- eine Schicht $C_3$, die für den genannten Wellenlängenbereich als absorbierend bezeichnet wird und unmittelbar auf der zweiten transparenten Schicht vorgesehen ist und eine Brechzahl $n_3$ aufweist, die höher ist als die Brechzahl $n_2$ der zweiten transparenten Schicht und die mit einer Schicht $C_4$ bedeckt ist, wobei

die Schichten $C_3$ und $C_4$ entgegengesetzte Leitungstypen aufweisen und einen p-n-Übergang bilden, der das Photodetektorelement D bildet, das durch vertikale Kopplung über eine Koppellänge $L_2$ direkt mit dem Zwischenleiter $G_2$ gekoppelt ist,
dadurch gekennzeichnet, daß
- der in der ersten transparenten Schicht $C_1$ gebildete Hauptleiter $G_1$ mit seitlichen Begrenzungsmitteln versehen ist um ein Hauptsignal mit einer ersten Intensität $\phi_1$ zu transportieren,
- die zweite transparente Schicht $C_2$ unmittelbar auf der Oberfläche der ersten transparenten Schicht $C_1$ vorgesehen ist,
- der Zwischenleiter $G_2$ durch direkte vertikale Kopplung mit dem Hauptleiter $G_1$ gekoppelt ist, und daß die Länge der Kopplung $L_1$ derart ist, daß die als zweite Intensität bezeichnete Intensität $\phi_2$ des vom Hauptleiter $G_1$ gelieferten und vom Zwischenleiter $G_2$ empfangenen Signals gegenüber der genannten ersten Intensität $\phi_1$ des über den Hauptleiter $G_1$ transportierten Signals geringer ist,
- die Länge der Kopplung $L_2$ derart ist, daß die Intensität des vom Zwischenleiter $G_2$ gelieferten und vom Detektor empfangenen Signals der Gesamtheit der zweiten geringen Intensität $\phi_2$ des über den genannten Zwischenleiter transportierten Signals,
- der Hauptleiter $G_1$ auf der anderen Seite des Kopplungsgebietes mit dem Zwischenleiter mit seitlichen Begrenzungsmitteln fortgesetzt ist um jenseits dieses Kopplungsgebietes den transport des Hauptsignals mit einer Intensität fortzusetzen, die der ersten Intensität $\phi_1$ nahezu entspricht.

**2.** Integrierte Halbleiteranordnung nach Anspruch 1, dadurch gekennzeichnet, daß der Zwischenleiter $G_2$ mit Reflexionsmitteln versehen ist um den Strahl $\phi_1$, den er in einer Richtung transportiert, die anders ist als die Richtung der Achse des Hauptleiters $G_1$, abzulenken und diesen abgelenkten Strahl in Richtung des dann in einer verlängerten Zone des Substrats des Hauptleiters $G_1$ vorgesehenen Photodetektors zu transportieren.

**3.** Anordnung nach Anspruch 2, dadurch gekennzeichnet, daß der Zwischenleiter $G_2$ am Ende der Kopplungslänge $L_1$ mit einer Spiegelfläche $M_1$ versehen ist zum Reflektieren des Lichtes in Richtung des in einer verlängerten Zone des

Leiters $G_1$ vorgesehenen Photodetektors.

4. Anordnung nach Anspruch 3, dadurch gekennzeichnet, daß die Spiegelfläche $M_1$ eine kristallographische Facette ist.

5. Anordnung nach einem der Ansprüche 1 bis 4, dadurch gekennzeichnet, daß der Zwischenleiter $G_2$ am Ende der Kopplungslänge $L_2$ mit einer Spiegelfläche $M_2$ versehen ist zum Reflektieren des Lichtes in Richtung der absorbierenden Schicht $C_3$ des Photodetektors D.

6. Anordnung nach Anspruch 5, dadurch gekennzeichnet, daß die Spiegelfläche $M_2$ eine kristallographische Facette ist.

7. Anordnung nach einem der Ansprüche 1 bis 6, dadurch gekennzeichnet, daß Längsflächen des Lichtwellenleiters oder der Lichtwellenleiter sowie die Flächen des Detektors durch kristallographische Facetten begrenzt werden.

8. Anordnung nach einem der Ansprüche 1 bis 7. dadurch gekennzeichnet, daß das Substrat S eine Verbindung $A_{III}B_V$ ist, in der A beispielsweise das Element Indium In und B beispielsweise das Element Phosphor P ist, daß die Begrenzungsschicht aus dieser Verbindung $A_{III}B_V$ vom $n^+$-Leitungstyp besteht, daß die erste transparente Schicht $C_1$ aus dieser Verbindung $A_{III}B_V$ vom $n^-$-Leitungstyp besteht, daß die absorbierende Schicht $C_3$ aus einer Verbindung ($A_{III}X_{III}$, $B_V Y_V$) besteht, wobei A beispielsweise das Element Gallium (Ga), B beispielsweise das Element Phosphor (P) und Y beispielsweise das Element Arsen (As) ist, die auf diese Weise eine vierte Verbindung mit der nachfolgenden Formel (GaIn, $As_y P_{1-y}$) bilden, in der die Konzentration y gewählt worden ist um Absorptionseigenschaften der Verbindung für die gewählte Betriebswellenlänge zu erhalten.

9. Anordnung nach Anspruch 8, dadurch gekennzeichnet, daß für die gewählte Betriebswellenlänge $\lambda_1$ = 1,3 $\mu$m die Konzentration y durch die Beziehung $0,7 \leqq y < 1$ gebunden ist.

10. Anordnung nach einem der Ansprüche 7 oder 8, dadurch gekennzeichnet, daß die zweite transparente Schicht $C_2$ die nachfolgende Verbindung hat ($A_{III}X_{III}$, $B_V Y_V$), in der beispielsweise A Indium (In), X Gallium (Ga), B Phosphor (P) und Y Arsen (As) ist, die auf diese Weise eine vierte Verbindung mit der nachfolgenden Formel bilden (GaIn, $As_y P_{1-y}$), in der die Konzentration y derart gewählt ist, daß Transparenzeigenschaften für die gewählte Betriebswellenlänge erhalten werden.

11. Anordnung nach Anspruch 10, dadurch gekennzeichnet, daß für die gewählte Betriebswellenlänge $\lambda$ = 1,3 $\mu$m die Konzentration y durch die Beziehung $0,7 \leqq y < 1$ gebunden ist.

FIG.1a

FIG.2a

EP 0 252 565 B1

FIG.2b FIG.2c FIG.2d FIG.1b FIG.1c FIG.1d

16

FIG.3a

FIG.3b

FIG.4a

18

FIG.4b

FIG.4c

FIG.4d

FIG.4e

FIG.4f

FIG.5

EP 0 252 565 B1

FIG.6a

FIG.6b